# EUROPEAN PATENT APPLICATION

(11) **EP 4 554 103 A1**
(43) Date of publication of application: **14.05.2025**
(21) Application number: 24205168.8
(22) Date of filing: 08.10.2024
(51) Int. Cl.: H04B 5/77, B60R 25/20

(54) **CONTROL SYSTEM**

(30) Priority: 13.11.2023 JP 2023193069
(71) Applicant: Aisin Corporation, Aichi 448-8650 (JP)
(72) Inventor: KOIZUMI, Takaaki, Kariya, 448-8650 (JP); TSUJI, Haruki, Kariya, 448-8650 (JP)
(74) Representative: TBK

(57) **Abstract**

A control system (1) mounted on a vehicle (2) and controls communication with a communication device present around the vehicle (2) includes a detector (20) that causes an electromagnetic field to be generated around an antenna (10) in a first mode in which the detector (20) operates under a preset first condition, and detects disturbance of the electromagnetic field on the basis of a change in impedance of the antenna (10), a communicator (30) that outputs information for a communication device associated with the vehicle (2) to surroundings of the vehicle (2) by using near field communication, in a case where the disturbance is detected, and a counter (40) configured to count the number of times the information is output, in a case where there is no response to the information even though the communicator (30) outputs the information, in which the detector (20) is configured to shift to a second mode in which the detector (20) operates under a second condition in which power is consumed less than in the first condition, in a case where a result of counting by the counter (40) within a preset first period exceeds a preset number of times.

## Description

### TECHNICAL FIELD

This disclosure relates to a control system that is mounted on a vehicle and controls communication with a communication device present around the vehicle.

### BACKGROUND DISCUSSION

Conventionally, there has been used a technique of detecting presence of a communication device around a vehicle on the basis of disturbance of a magnetic field, and, if the communication device is detected to be present, shifting to a communication state in which communication is performed with the communication device. Examples of such a technique include those described in US 2021/037,0877 A and JP 2016-79600 A.

US 2021/037,0877 A describes a door handle device provided on a door handle of a vehicle. The door handle device includes an antenna and near field communication (NFC) reader disposed on a handle portion. The antenna generates a magnetic field in surroundings, and the NFC reader detects disturbance of the magnetic field. The NFC reader is configured to shift from a power-saving operation state to an active operation state in response to proximity of an NFC tag.

JP 2016-79600 A describes a vehicle verification system. The vehicle verification system includes an on-vehicle device mounted on a vehicle and an electronic key carried by a user of the vehicle. Verification is performed by wireless communication between the on-vehicle device and the electronic key, and if there is an intended operation by a user when the user leaves the vehicle, the verification is stopped for a certain period of time.

In the door handle device described in US 2021/037,0877 A, for example, the magnetic field is disturbed also when a metal object different from the NFC tag is brought close due to mischief or the like, and the NFC reader shifts to the active operation state. The NFC reader shifts to the active operation state also when the magnetic field is disturbed in an electromagnetic interference (EMI) environment. Thus, even when the NFC reader cannot communicate, unnecessary communication is performed when the NFC reader is in the active operation state, increasing power consumption.

In the vehicle verification system described in JP 2016-79600 A, in a case where the user desires to perform locking/unlocking earlier than an originally assumed timing, an operation different from a normal operation is required, which is inconvenient. When a certain period of time elapses, verification can be resumed, and thus dark current increases.

A need thus exists for a control system capable of reducing power consumption.

### SUMMARY

A characteristic configuration of a control system according to this disclosure is a control system that is mounted on a vehicle and controls communication with a communication device present around the vehicle, the control system including a detector that causes an electromagnetic field to be generated around an antenna in a first mode in which the detector operates under a preset first condition, and detects disturbance of the electromagnetic field on the basis of a change in impedance of the antenna, a communicator that outputs information for a communication device associated with the vehicle to surroundings of the vehicle by using near field communication, in a case where the disturbance is detected, and a counter that counts the number of times the information is output, in a case where there is no response to the information even though the communicator outputs the information, in which the detector shifts to a second mode in which the detector operates under a second condition in which power is consumed less than in the first condition, in a case where a result of counting by the counter within a preset first period exceeds a preset number of times.

With such a characteristic configuration, in a case where the detector detects disturbance of the electromagnetic field, if there is no response to the information within the first period even though the communicator has output the information for the communication device by using the near field communication, the operation of the detector can be shifted to operation in the second mode with reduced power consumption. Therefore, in a case where there is no response to the information within the first period, it is possible to reduce power consumption. Moreover, with a simple configuration such as counting by the counter, it is possible to prevent erroneous detection in which a metal object different from the NFC tag approaches due to mischief or the like, in a case where there is no response to the information within the first period.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a diagram showing a vehicle including a control system;
Fig. 2 is a block diagram showing a configuration of a control system;
Fig. 3 is a timing chart showing operation of the control system; and
Fig. 4 is a flowchart showing processing of the control system.
Fig. 5 is a flowchart showing processing (return processing) of shifting to a first mode.

### DETAILED DESCRIPTION

A control system according to this disclosure is configured to control communication with a communication device present around a vehicle. Hereinafter, a control system 1 of the present embodiment will be described. The control system 1, however, is not limited to the following embodiments, and various modifications may be made without departing from the gist of the modifications.

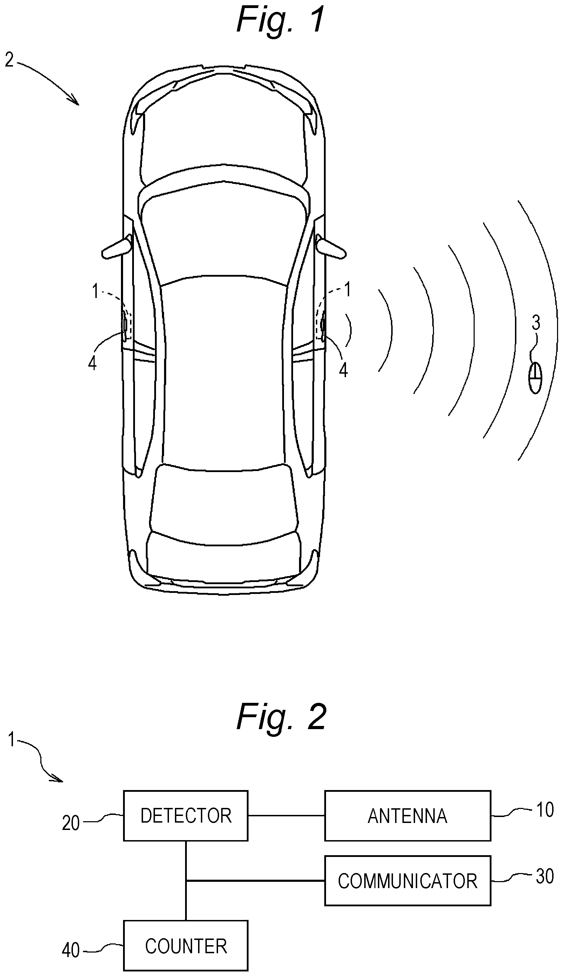

Fig. 1 is a diagram showing a vehicle 2 including the control system 1. As shown in Fig. 1, the control system 1 is provided on a door handle 4 of the vehicle 2. The control system 1 of the present embodiment detects a smart key (an example of a "communication device") 3 present around the vehicle 2. The smart key 3 is a key associated with the vehicle 2, and can put a lock mechanism of the doors of the vehicle 2 into a locked state or an unlocked state by a lock/unlock switch of the smart key 3 being pressed or a predetermined portion of the door being touched. In a case where the communication device is a portable terminal such as a smartphone, operation of an application can lock and unlock the door.

Next, a configuration of the control system 1 will be described. Fig. 2 is a schematic diagram showing a configuration of the control system 1. As shown in Fig. 2, the control system 1 includes an antenna 10, a detector 20, a communicator 30, and a counter 40, and each of the functional units is constructed with hardware, software, or both with a CPU as a core member, in order to perform processing related to communication with the smart key 3.

Power is fed from a power feeder (not illustrated) to the antenna 10 and generates an electromagnetic field around the antenna 10. In the present embodiment, power is fed to the antenna 10 so that the electromagnetic field is periodically generated around the antenna 10 at a cycle of several hundred milliseconds.

The antenna 10 is configured to be able to switch an operation state (operation of generating an electromagnetic field) between a first mode and a second mode. The first mode is a mode in which the antenna 10 operates under a preset first condition. In the first condition the power to be fed to the antenna 10, a cycle at the electromagnetic field from the antenna 10 is generated, and the like are defined. Meanwhile, the second mode is a mode in which the antenna 10 operates under a second condition in which power is consumed less than in the first mode. "Power is consumed less than in the first mode" means that power is fed to the antenna 10 with power less than the power defined in the first condition. "Power less than the power defined in the first condition" means that the power to be fed itself may be little, or a power feed cycle may be long. Therefore, in the second condition, power less than the power defined in the first condition or a long power feed cycle is defined. As a matter of course, either the power or the power supply cycle may be defined in the second condition.

The detector 20 detects disturbance of the electromagnetic field on the basis of a change in impedance of the antenna 10. As described above, an electromagnetic field is periodically generated around the antenna 10. If a metal body including the smart key 3 is present in a region where the electromagnetic field is generated, the electromagnetic field is disturbed. When such an electromagnetic field is disturbed, a change appears in the impedance of the antenna 10. The detector 20 detects disturbance of the electromagnetic field on the basis of such a change in impedance. If the detector 20 detects the disturbance, the detector 20 transmits detection information indicating that the disturbance of the electromagnetic field has been detected, to the communicator 30, which will be described later. The disturbance of the electromagnetic field due to the presence of the metal body is generated even when the smart key 3 runs out of battery, which is convenient.

In a case where the disturbance of the electromagnetic field is detected, the communicator 30 outputs information to surroundings of the vehicle 2 by using near field communication. The information is for the smart key 3 and is associated with the vehicle 2. As described above, when the detector 20 detects the disturbance of the electromagnetic field, the detection information indicating that the disturbance of the electromagnetic field has been detected is transmitted to the communicator 30. The smart key 3 associated with the vehicle 2 is a smart key 3 capable of operating the lock mechanism of the doors of the vehicle 2. The information is information capable of switching the lock mechanism from either the unlocked or locked state to the other. Specifically, the information corresponds to an electronic lock. Here, the communicator 30 outputs the information from the antenna 10 with which disturbance has occurred. The near field communication specifically corresponds to near field communication (NFC).

When the smart key 3 acquires the information output by the communicator 30, the smart key 3 makes a response corresponding to the information, and the communicator 30 checks whether or not the smart key 3 is associated with the vehicle 2. If a result of the check indicates that the smart key 3 is associated with the vehicle 2, the communicator 30 continues the communication with the smart key 3. Meanwhile, if the result of the check does not indicate that the smart key 3 is associated with the vehicle 2, the communicator 30 ends the communication with the smart key 3.

As described above, a detection target detected by the detector 20 is disturbance of the electromagnetic field, and the disturbance of the electromagnetic field occurs not only by the presence of the smart key 3 but also by the presence of the metal body. When the smart key 3 acquires the information from the communicator 30, the smart key 3 responds to the information. Meanwhile, the metal body does not respond even when the information from the communicator 30 reaches the metal body If the smart key 3 is another smart key not associated with the vehicle 2, the smart key 3 cannot respond to the information from the communicator 30 appropriately. Therefore, in a case where there is no response to the information even though the communicator 30 has output the information, the counter 40 counts the number of times the communicator 30 has output the information. The number of times the information has output corresponds to the number of times the communicator 30 has failed the communication. Therefore, the counter 40 counts the number of times the communicator 30 has failed the communication. A result of the counting by the counter 40 is transmitted to the detector 20.

The number of times the communicator 30 has failed the communication may be counted only when technology detection (TD) in NFC Forum fails, or may be counted when TD and collision resolution (CR) in the NFC Forum fail.

The detector 20 shifts to the second mode in a case where a result of the number counted by the counter 40 in a preset first period exceeds a preset number of times. The preset first period can be appropriately changed. However, as described above, if the communicator 30 continues to output information even though there is no response to the information, power is wastefully consumed. Therefore, the first period may be set on the basis of power consumption by the communicator 30 and capacitance of the battery serving as a power source with which the communicator 30 outputs information. The first period can be set to, for example, about a few dozen seconds (for example, about 30 seconds). In a case where the number of times the communicator 30 fails communication during the first period exceeds a preset number of times, the detector 20 shifts to the second mode in which operation is performed under the second condition in which power is consumed less than in the first mode.

When shifting to the second mode, the detector 20 suspends generation of the electromagnetic field for a preset second period. The second period may be set to, for example, about several minutes (for example, about five minutes). Even when the communicator 30 fails in the communication as described above, if there is a metal body or a smart key not associated with the lock mechanism of the vehicle 2 in a range where the electromagnetic field is generated, the detector 20 continues the detection of the disturbance of the electromagnetic field, and the communicator 30 continues the communication. For this reason, by suspending the generation of the electromagnetic field, it is possible to eliminate a failure of communication and reduce consumption of power required for the communication in a predetermined period.

The detector 20 measures the disturbance of the electromagnetic field for a preset third period after the second period has elapsed, and, in a case where the disturbance is detected in the third period, determines whether or not there is a response to the information output from the communicator 30, on the basis of the detected disturbance of the electromagnetic field. In a case where there is a response to the information output from the communicator 30, the detector 20 shifts to the operation in the first mode, and when there is no response to the information, the detector 20 continues the operation in the second mode. The third period is preferably about as long as the first period described above. As a matter of course, the third period may be longer or shorter than the first period. The detector 20 may be configured to measure the disturbance of the electromagnetic field for the third period, and, in a case where the disturbance is detected in the third period, determine whether or not the disturbance continues, on the basis of the detected disturbance. In such a configuration, in a case where the disturbance of the electromagnetic field is not detected, there is no risk of an increase in current consumption due to erroneous detection. Therefore, it is possible to configure the detector 20 to shift to the operation in the first mode in preparation for a user waving a device (smart key herein, card) next time.

Whether or not the disturbance of the magnetic field caused by a surrounding environment continues may be determined on the basis of antenna drive of the communicator 30. Specifically, if, of a plurality of times an antenna of the communicator 30 is driven, the number of times disturbance is detected does not reach a predetermined number of times, it is determined that the disturbance of the electromagnetic field does not continue. If, of the plurality of times the antenna of the communicator 30 is driven, the number of times disturbance is detected is equal to or greater than the predetermined number of times, it is determined that the disturbance of the electromagnetic field continues. In a case where disturbance of the electromagnetic field is detected during such determination, the operation in the second mode may continue, and the processing may not shift to communication by the communicator 30 (TD or CR in the NFC Forum). A configuration in which the detector 20 does not shift to the communication by the communicator 30 when disturbance of the electromagnetic field is detected during such determination is preferable. This is because an effect of power consumption reduction is higher than with a configuration in which the communicator 30 outputs information for the smart key 3 by using the near field communication when disturbance of the electromagnetic field is detected. In addition, at this time, it is preferable to set the third period to, for example, about several hundred milliseconds (for example, about 100 milliseconds to 500 milliseconds, because the effect of power consumption reduction is high.

When continuing the operation in the second mode, the detector 20 preferably suspends generation of the electromagnetic field for a period longer than the second period. This makes it possible to further reduce power consumption.

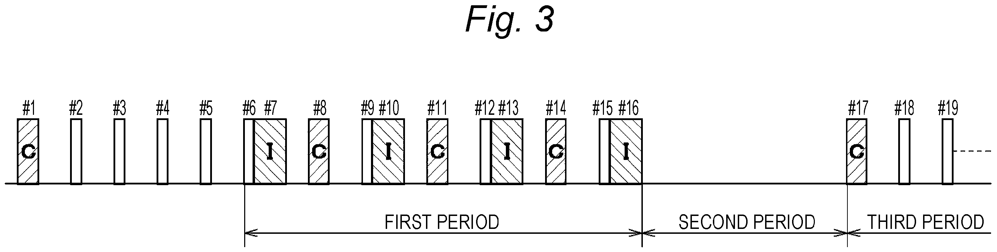

Next, operation of the control system 1 in Fig. 3 will be described with reference to a timing chart. Fig. 3 is a timing chart in a case where the detector 20 and the communicator 30 are driven on the basis of an NFC standard (hereinafter referred to as "NFC driving"). First, in order to use the antenna 10 as an inductive sensor that detects presence or absence of an object and a distance to the object, calibration is performed (#1) (denoted by "C" in Fig. 3). After completing the calibration, for example, a low-power-consumption card detection function performs transmission at a cycle of 200 milliseconds (#2 to #5). One transmission is only required to take about a few dozen microseconds. Note that the "card" in the "low-power-consumption card detection function" includes a smart device and the like, in addition to a card.

For example, if the detector 20 detects disturbance of the electromagnetic field in response to the transmission in #6, the communicator 30 outputs information with NFC (#7) (denoted by "I" in Fig. 3). In a case where there is no response to the output information, it is determined that NFC communication has failed, and the calibration is performed again (#8). When the calibration is completed, the low-power-consumption card detection function performs the transmission again

(#9), and when the detector 20 detects disturbance of the electromagnetic field, the communicator 30 outputs information with NFC (#10). Such calibration, transmission by the low-power-consumption card detection function, and transmission of information by the communicator 30 are repeated, and when the number of times communication fails within the preset first period exceeds the preset number of times (four times in the example in Fig. 3), the NFC driving stops for the second period.

When the second period elapses, the NFC driving is performed for the third period. That is, calibration is performed (#17), and transmission is performed (#18, #19).

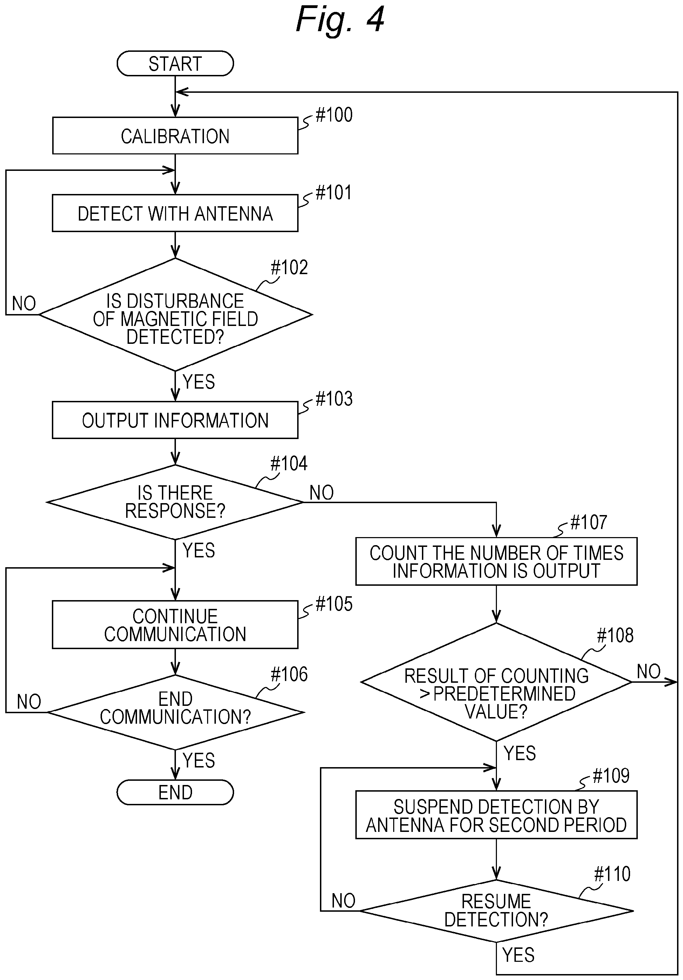

Next, processing of the control system 1 will be described with reference to a flowchart in Fig. 4. First, calibration is performed (step #100). When the calibration is completed, detection by the antenna 10 is started (step #101). Specifically, the low-power-consumption card detection function starts transmission. In a case where the detector 20 does not detect the disturbance of the magnetic field (Step #102: No), the detection by the antenna 10 continues (#101).

When the detector 20 detects the disturbance of the magnetic field (Step #102: Yes), the communicator 30 outputs information (#103). If there is a response to the output information (step #104: Yes), communication is performed (step #105), and the outputting continues until the communication ends (step #106: Yes).

In step #104, if there is no response to the output information (step #104: No), the counter 40 counts the number of times the information is output (step #107). If a result of counting by the counter 40 in the first period exceeds a preset number of times (predetermined value) (step #108: Yes), the detection by the antenna 10 is suspended for the second period (step #109). In a case where the detection by the antenna 10 is resumed (step #110: Yes), the processing returns to step #100 and continues. In a case where the detection by the antenna 10 is not resumed (step #110: No), the processing returns to step #109 and continues. In step #108, if the result of counting by the counter 40 in the first period is equal to or less than the preset number of times (predetermined value) (step #108: No), the processing returns to step #100 and continues. The processing is performed along the flow described above.

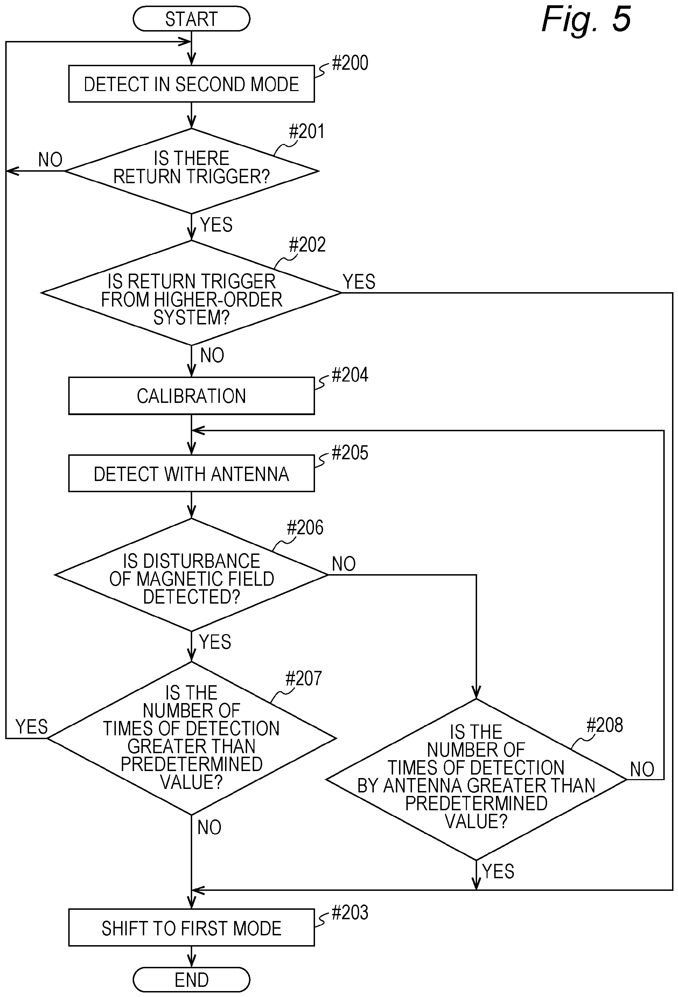

Next, the shifting from the second mode to the first mode (return processing) will be described with reference to the flowchart in Fig. 5. As described above, the detector 20 shifts to the second mode in a case where the result of the number counted by the counter 40 within the preset first period exceeds the preset number of times. In a case where the detector 20 performs detection in the second mode (step #200), if there is a return trigger (step #201: Yes) and the return trigger is from a higher-order system (step #202: Yes), the detector 20 shifts to the first mode (step #203) .

In step #201, in a case where there is no return trigger (step #201: No), the detection in the second mode continues (step #200). In step #202, in a case where the return trigger is not from the higher-order system (step #202: No), calibration is performed (step #204), and the antenna 10 performs detection (step #205).

In a case where the detector 20 detects the disturbance of the electromagnetic field (step #206: Yes) and the number of times of detection is greater than the predetermined value (step #207: Yes), the processing returns to step #200 and continues. Meanwhile, in a case where the number of times of detection is equal to or less than the predetermined value (step #207: No), the detector 20 shifts to the first mode (step #203).

In step #206, in a case where the detector 20 does not detect the disturbance of the electromagnetic field (step #206: No) and the number of times of detection by the antenna 10 is greater than the predetermined value (step #208: Yes), the detector 20 shifts to the first mode (step #203). Meanwhile, in a case where the number of times of detection by the antenna 10 is equal to or less than the predetermined value (step #208: No), the processing returns to step #205 and continues.

Here, the return trigger in step #201 is, for example, information indicating proximity/contact of a person, from an electrostatic sensor provided a door handle 4. In this case, the information may be directly transmitted from the electrostatic sensor to a controller (not illustrated) of the control system 1. Alternatively, the information may be transmitted from the electrostatic sensor to a controller of the lock mechanism, and the information may be transmitted from the controller of the lock mechanism or another control unit to the controller of the control system 1. Polling may be performed on the controller of the lock mechanism or another control unit. The return trigger may be an operation of a lock switch or unlock switch provided with the smart key 3. When the lock mechanism is operated by using a digital key, a lock command or an unlock command by using the digital key can be used.

In a case where the electrostatic sensor provided on a door handle 4 detects proximity/contact of a person (for example, in a case where the user grips an unlock sensor), the user can naturally resume a function during the operation of getting into the vehicle (that is, the low-power-consumption card detection function can be automatically resumed). Therefore, convenience can be improved.

The communicator 30 performs TD in communication based on NFC. However, in a case where there is no response to the TD, processing may be performed treating it as an erroneous detection. In a case where it is a response to this TD, CR may be performed. Then, if a type of the card is a specific type (for example, "T4AT"), the processing may continue, and if the type of the card is not the specific type (for example, "T2T"), processing may be performed treating it as an erroneous detection.

### [Other embodiments]

Next, other embodiments of a control system 1 will be described.

In the above embodiment, it has been described that, when shifting to the second mode, the detector 20 suspends the generation of the electromagnetic field for the preset second period. However, when shifting to the second mode, the detector 20 may extend the cycle of the generating the electromagnetic field for the preset second period. Alternatively, a threshold value for detecting disturbance of the electromagnetic field may be changed. In this case also, power consumption can be reduced.

In the above embodiment, it has been described that the detector 20 detects disturbance of the electromagnetic field for the third period after a lapse of the second period. The detector 20 shifts to the operation in the first mode if, on the basis of the disturbance of the electromagnetic field detected in the third period, there is a response to the information output from the communicator 30, whereas continues the operation in the second mode if there is no response to the information. The detector 20 may be configured to detect the disturbance of the electromagnetic field for the third period after the lapse of the second period and shift to the operation in the first mode regardless of, on the basis of the disturbance of the electromagnetic field detected in the third period, whether or not there is a response to the information output from the communicator 30.

In the above embodiment, it has been described that the detector 20 suspends the generation of the electromagnetic field for a period longer than the second period when continuing the operation in the second mode. However, the detector 20 may be configured to extend the cycle of generating an electromagnetic field for a period longer than the second period, when continuing the operation in the second mode.

In the above embodiment, an example in which the communication device is the smart key 3 has been described. However, the communication device may be a card key or a portable terminal such as a smartphone.

### [Overview of above embodiments]

Hereinafter, an overview of the control system 1 described above will be described.
(1) A control system 1 is mounted on a vehicle 2 and controls communication with a smart key 3 (communication device) present around the vehicle 2, the control system 1 including a detector 20 that causes an electromagnetic field to be generated around an antenna 10 in a first mode in which the detector 20 operates under a preset first condition, and detects disturbance of the electromagnetic field on the basis of a change in impedance of the antenna 10, a communicator 30 that outputs, by using near field communication, information for a smart key 3 associated with the vehicle 2, in a case where the disturbance is detected, and a counter 40 that counts the number of times the information is output, in a case where there is no response to the information even though the communicator 30 outputs the information to surroundings of the vehicle 2, in which the detector 20 is configured to shift to a second mode in which the detector 20 operates under a second condition in which power is consumed less than in the first condition, in a case where a result of counting by the counter 40 within a preset first period exceeds a preset number of times.
   According to the configuration, in a case where the detector 20 detects the disturbance of the electromagnetic field, if there is no response to the information within the first period even though the communicator 30 has output the information for the smart key (communication device) 3 by using the near field communication, the operation of the detector 20 can be shifted to the operation in the second mode with reduced power consumption. Therefore, in a case where there is no response to the information within the first period, it is possible to reduce power consumption. Moreover, with a simple configuration such as counting by the counter 40, it is possible to prevent erroneous detection in which a metal object different from the NFC tag approaches due to mischief or the like, in a case where there is no response to the information within the first period.
(2) In the control system 1 according to (1), the detector 20 preferably suspends generation of the electromagnetic field or extends a cycle of generating the electromagnetic field for a preset second period, in a case where the detector 20 has shifted to the second mode.
   According to the configuration, in the second mode, the detector 20 suspends the generation of the electromagnetic field or extends the cycle of generating the electromagnetic field, by which power consumption can be reduced as compared with a case where the detector 20 continues the generation of the electromagnetic field or does not change the cycle of generating the electromagnetic field.
(3) In the control system 1 according to (2), the detector 20 is preferably configured to measure disturbance of the electromagnetic field for a preset third period after the second period has elapsed, and, in a case where the disturbance has been detected in the third period, determine, on the basis of the disturbance, whether or not the disturbance continues, and the communicator 30 is preferably configured to continue operation in the second mode without performing communication in a case where the disturbance is determined in the determination to continue, and shift to operation in the first mode, in a case where the disturbance is determined in the determination not continue.
   According to the configuration, in a case where the disturbance of the electromagnetic field is not detected, there is no risk of an increase in current consumption due to erroneous detection. Therefore, it is possible to prepare for a user waving a device (smart key herein, card) next time. Meanwhile, in a case where the disturbance of the electromagnetic field is continuously detected, the operation in the second mode continues, by which the power consumption can be continuously reduced.
   In a case where disturbance of the electromagnetic field is detected during the determination, the processing may not shift to communication by the communicator 30 (TD or CR in the NFC Forum). In this case, power consumption for communication can be further reduced.
(4) The control system 1 according to (3) preferably continues operation in the second mode in a case where the disturbance is determined in the determination to continue, and, in a case where the operation in the second mode continues, preferably suspends generation of the electromagnetic field or extends a cycle of generating the electromagnetic field for a period longer than the second period.

According to the configuration, power consumption can be further reduced. Therefore, power saving effect can be enhanced.

Technology according to this disclosure can be used for a control system that is mounted on a vehicle and controls communication with a communication device present around the vehicle.

## Claims

1. A control system (1) mounted on a vehicle (2) and configured to control communication with a communication device present around the vehicle (2), the control system (1) comprising:
a detector (20) configured to cause an electromagnetic field to be generated around an antenna (10) in a first mode in which the detector (20) operates under a preset first condition, and detect disturbance of the electromagnetic field on the basis of a change in impedance of the antenna (10);
a communicator (30) configured to output information for a communication device associated with the vehicle (2) to surroundings of the vehicle (2) by using near field communication, in a case where the disturbance is detected; and
a counter (40) configured to count the number of times the information is output, in a case where there is no response to the information even though the communicator (30) outputs the information, wherein
the detector (20) is configured to shift to a second mode in which the detector (20) operates under a second condition in which power is consumed less than in the first condition, in a case where a result of counting by the counter (40) within a preset first period exceeds a preset number of times.

2. The control system (1) according to Claim 1, wherein the detector (20) is configured to suspend generation of the electromagnetic field or extend a cycle of generating the electromagnetic field for a preset second period, in a case where the detector (20) has shifted to the second mode.

3. The control system (1) according to Claim 2, wherein
the detector (20) is configured to measure disturbance of the electromagnetic field for a preset third period after the second period has elapsed, and, in a case where the disturbance has been detected in the third period, determine, on the basis of the disturbance, whether or not the disturbance continues, and
the communicator (30) is configured to continue operation in the second mode without performing communication in a case where the disturbance is determined in the determination to continue, and shift to operation in the first mode, in a case where the disturbance is determined in the determination not to continue.

4. The control system (1) according to Claim 3, wherein the detector (20) is configured to continue operation in the second mode in a case where the disturbance is determined in the determination to continue, and, in a case where the operation in the second mode continues, suspend generation of the electromagnetic field or extend a cycle of generating the electromagnetic field for a period longer than the second period.
